# EUROPÄISCHE PATENTSCHRIFT

(11) **EP 1 580 448 B1**
(45) Veröffentlichungstag und Bekanntmachung des Hinweises auf die Patenterteilung: **29.08.2007**
(21) Anmeldenummer: 05004263.9
(22) Anmeldetag: 26.02.2005
(51) Int. Cl.: F16F 7/108

(54) **Schwingungsdämpfende Lagerung eines Bauteiles**
Vibration damping support of a component
Support anti-vibratoire d'un composant

(30) Priorität: 26.03.2004 DE 102004014889
(43) Veröffentlichungstag der Anmeldung: 28.09.2005
(73) Patentinhaber: Bayerische Motoren Werke Aktiengesellschaft, 80809 München (DE)
(72) Erfinder: Engelmohr, Franz, 82140 Olching (DE)

(56) Entgegenhaltungen:
- EP-A- 0 552 695
- EP-A- 0 681 117
- EP-A- 1 378 444
- DE-A1- 4 032 378
- DE-C1- 19 957 774
- US-A- 5 549 271
- US-B1- 6 321 890

## Beschreibung

Die Erfindung betrifft eine schwingungsdämpfende Lagerung eines Bauteiles, mit den im Oberbegriff des Patentanspruches 1 angegebenen Merkmalen.

Eine derartige schwingungsdämpfende Lagerung ist in der DE-A-4032378 vorgesehen. Eine weitere schwingungsdämpfende Lagerung ist in der DE 195 36 737 A1 zur schwingungsisolierenden Lagerung von Motoren, Maschinen oder Aggregaten vorgesehen. Die elastische Lagerung weist eine progressive Federkennlinie mit einer kleinen Hysterese auf, die geringe innere Reibkräfte verursacht. Mit der Lagerung sollen die Lagerkräfte klein bleiben. Eine dynamische Beeinflussung des von der Lagerung abgestützten Bauteiles durch die Lagerung ist nicht beabsichtigt.

Der Erfindung liegt die Aufgabe zu Grunde, eine schwingungsdämpfende Lagerung mit den Merkmalen im Oberbegriff des Patentanspruches 1 anzugeben, die in einfacher Weise selbsttätig eine dynamische Stabilisierung des zu Schwingungen angeregten Bauteiles bewirken kann.

Diese Aufgabe ist durch die im Patentanspruch 1 angegebenen Merkmale gelöst. Vorteilhafte Ausgestaltungen der Erfindung sind den Unteransprüchen entnehmbar.

An dem Lagerbolzen sind einerseits das Bauteil und andererseits die Schwingungsmasse abgestützt. Da sich die Schwingungsmasse über wenigstens einen elastischen Bereich an dem Lagerbolzen abstützt kann die Schwingungsmasse durch Schwingbewegungen des Bauteiles zu mechanischen Schwingungen angeregt werden und bei einer entsprechenden Abstimmung der Schwingungsmasse und des elastischen Bereiches den Schwingbewegungen des Bauteiles selbsttätig entgegen wirken, wodurch geringere dynamische Lagerkräfte auf das elastische Lager übertragen werden. Der eine ausreichende Länge aufweisende Lagerbolzen ist um seine Längsachse zumindest bereichsweise biegsam ausgebildet und kann elastische Bewegungen ausführen, die bei einer entsprechenden Abstimmung den Schwingbewegungen des Bauteiles entgegen wirken. Somit weist die schwingungsdämpfende Lagerung ohne das Lager zwei ausgeprägte Resonanzfrequenzen auf, die im wesentlichen durch die Biegeelastizität des Lagerbolzens und die daran abgestützten Massen sowie durch die Elastizität des elastischen Bereiches und die Schwingungsmasse bestimmt sind. Die beiden Resonanzfrequenzen können so abgestimmt werden, dass das Schwingungsverhalten des Bauteiles im Bereich der Resonanzfrequenzen selbsttätig stabilisiert wird, wodurch entsprechend geringere dynamische Lagerkräfte auf das elastische Lager übertragen werden.

Drei Ausführungsbeispiele der Erfindung werden an Hand einer Zeichnung näher erläutert. Es zeigen
- Fig. 1: ein erstes Ausführungsbeispiel in einem Querschnitt durch die Lagerung,
- Fig. 2: ein zweites Ausführungsbeispiel, bei dem der torusförmige elastische Bereich zwischen der Stützscheibe und der Schwingungsmasse im Querschnitt radial wellenförmig verläuft und
- Fig. 3: ein drittes Ausführungsbeispiel, mit einem torusförmigen, im Querschnitt keilförmigen elastischen Bereich zwischen der Stützscheibe und der Schwingungsmasse.

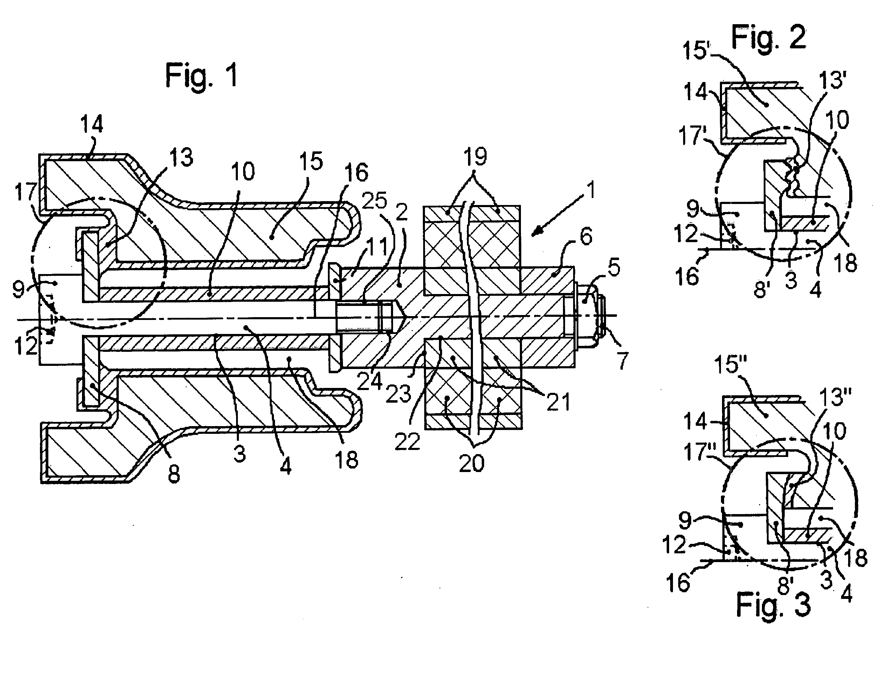

Die gemäß einem ersten Ausführungsbeispiel in Figur 1 in einem Querschnitt dargestellte Lagerung weist einen Hinterachsträger 19 auf, der beispielsweise über vier nicht dargestellte elastische Stützlager am Boden der Karosserie eines Kraftfahrzeugs befestigt ist. Der Hinterachsträger 19 bildet drei separate Lager, von denen in der Figur lediglich ein Lager 1 dargestellt ist. Über diese Lager 1 ist ein Hinterachsgetriebe elastisch abgestützt, das im Bereich des Lagers 1 ein Bauteil 6 aufweist. Im Bereich des Lagers 1 bildet der Hinterachsträger 19 eine zylindrische Lagerbuchse, die mit einem radialen Abstand koaxial von einer Innenhülse 21 durchsetzt ist. Zwischen der Innenhülse 21 und der Lagerbuchse des Hinterachsträgers 19 ist ein Elastomer 20 angeordnet, das an die benachbarten Bereiche des Hinterachsträger 19 und der Innenhülse 21 anvulkanisiert ist. Die Innenhülse 21 weist eine innere Durchtrittsöffnung 22 auf, die weitgehend radial spielfrei von einem zylindrischen Bereich eines bolzenförmigen Schraubenhalters 2 durchsetzt ist. Der Schraubenhalter 2 ist bis zum Anliegen einer axialen Stützfläche 23 an dem zugewandten Stirnbereich der Innenhülse 21 durch die Durchtrittsöffnung 22 hindurch gesteckt. Auf den aus der Durchtrittsöffnung 22 hervorstehenden zylindrischen Bereich des Schraubenhalters 2 ist radial weitgehend spielfrei das Bauteil 6 des Hinterachsgetriebes aufgesteckt und auf ein axial vorstehendes Gewinde 7 des Bolzenhalters 2 eine Mutter 5 aufgeschraubt, die zwischen sich oder einer zwischengelegten Unterlagscheibe oder Sicherungsscheibe und der Innenhülse 21 das Bauteil 6 axial fest klemmt. In dem von dem Lager 1 abgewandten Stirnbereich des Schraubenhalters 2 ist ein Gewinde 24 ausgebildet, in das ein Außengewinde 25 einer Schraube 4 eingeschraubt ist. Die Schraube 4 und der Schraubenhalter 2 sind in Achsrichtung hintereinander angeordnet und bilden einen im wesentlichen zweiteiligen Lagerbolzen, der seitlich von dem Lager 1 absteht. Die Schraube 4 weist ein radial erweitertes Kopfteil 9 auf, an dem eine von der Schraube 4 axial durchsetzte Stützscheibe 8 axial anliegt. Die Stützscheibe 8 ist zwischen dem Kopfteil 9 und einer auf den Schaft 3 der Schraube 4 aufgesteckten Distanzhülse 10 axial festgeklemmt, die sich über eine Unterlagscheibe 11 an der zugewandten Stirnseite des Schraubenhalters 2 axial abstützt. Die Schraube 4 kann über einen Inbusschlüssel gegenüber dem Schraubenhalter 2 festgezogen oder gelöst werden, der in eine axiale Innensechskantausnehmung 12 im Kopfteil 9 der Schraube 4 einsteckbar ist. Ebenso könnte die Schraube andere Kraftangriffsflächen aufweisen, über die unter Verwendung eines Werkzeugs ein entsprechendes Drehmoment an der Schraube bewirkt werden könnte. Nicht dargestellt sind Sicherungsmaßnahmen, die ein Lösen der festgezogenen Schraube 4 sowie der Mutter 5 verhindern. Der radial äußere Umfang der Stützscheibe 8 ist in ein Elastomer 13 eingebettet, das durch eine Verdickung einer Ummantelung 14 gebildet ist, die eine Schwingungsmasse 15 aus Metall allseitig umgibt. Die Verdickung des Elastomers 13 bildet einen elastischen Bereich, über den die Schwingungsmasse 15 mit der Stützscheibe 8 verbunden ist. Das Elastomer 13 ist einerseits an der Schwingungsmasse 15 und andererseits an der Stützscheibe 8 anvulkanisiert. Die Schraube 4 weist eine solche axiale Länge auf, dass die eine axiale Durchgangsöffnung 18 für die Schraube 4 aufweisende Schwingungsmasse 15 mit einem radialen Abstand im wesentlichen über dem Schaft 3 der Schraube 4 angeordnet ist.

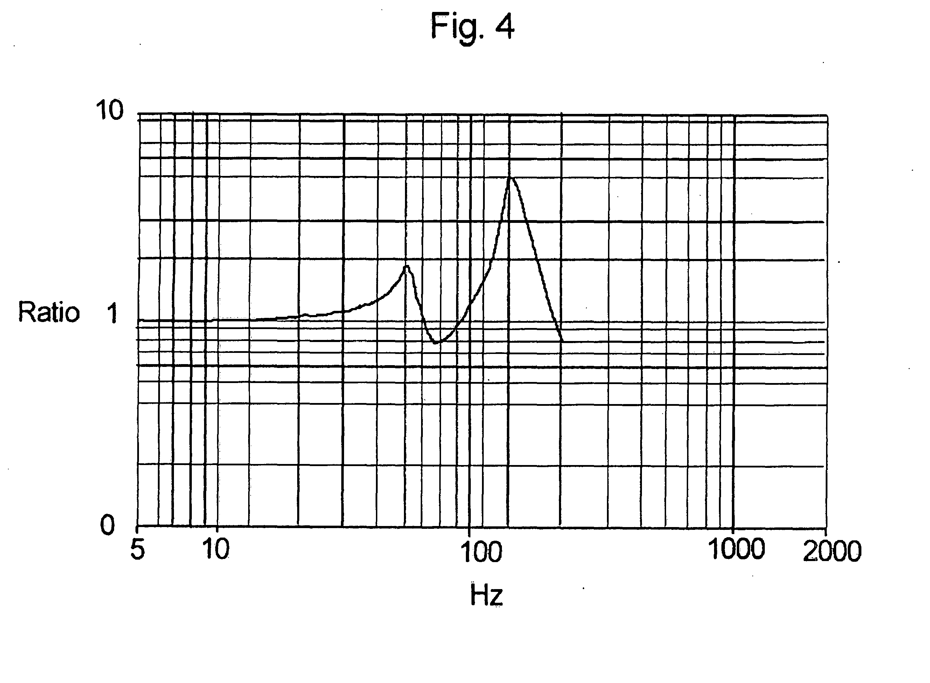

Der durch die Schraube 4 und den Schraubenhalter 2 gebildete Lagerbolzen ist zumindest im Bereich der Schraube 4 um die gemeinsame Längsachse 16 zumindest etwas biegsam ausgebildet. Die Distanzhülse 10 ist ebenfalls um die Längsachse 16 zumindest etwas biegsam. Durch Schwingbewegungen des Bauteiles 6 angeregt kann die Schwingungsmasse 15 über das Elastomer 13 gegenüber der Stützscheibe 8 mechanische Schwingungen ausführen, die bei einer entsprechenden Abstimmung der Elastizitäten der Schraube 4 sowie der Distanzhülse 10 und der Verdickung des Elastomers 13 und der verwendeten Massen, insbesondere der Schwingungsmasse 15, den Schwingbewegungen des Bauteiles 6 entgegen wirken können. Da die Schraube 4 bzw. die Distanzhülse 10 elastisch biegsam sind, weist der durch den Lagerbolzen und die damit elastisch verbundene Schwingungsmasse 15 gebildete Schwingungstilger im wesentlichen zwei in Figur 4 dargestellte Resonanzfrequenzen auf; in denen die Schwingungsmasse 15 den Schwingbewegungen des Bauteiles 6 entgegen wirken können. Die in das Lager 1 eingeleiteten dynamischen Kräfte sind dadurch vermindert und können sich entsprechend weniger als störender Körperschall bemerkbar machen oder über das Lager 1 auf andere Bauteile übertragen werden.

Die in den Figuren 2 und 3 dargestellten Ausführungsbeispiele zwei und drei sind ähnlich wie das erste Ausführungsbeispiel gebildet. Zur Vermeidung einer wiederholten Beschreibung sind zwischen den Ausführungsbeispielen eins bis drei vergleichbare Bauteile mit einer gleichen Bezugszahl und teilweise zur besseren Unterscheidung mit einem hochgestellten Zeichen versehen. Die in den Figuren 2 und 3 dargestellten Bereiche 17', 17" entsprechen dem in Figur 1 durch einen unterbrochenen Kreis dargestellten Bereich 17.

Bei dem zweiten Ausführungsbeispiel gemäß Figur 2 ist der durch ein Elastomer 13' gebildete elastische Bereich zwischen der Stützscheibe 8' und der Schwingungsmasse 15' im Querschnitt radial wellenförmig ausgebildet, wobei der jeweils angrenzende Bereich der Stützscheibe 8' und der Schwingungsmasse 15' entsprechend wellenförmig ausgebildet sind. Durch die Wellenform ist das Elastomer 13' insbesondere in radialer Richtung unterschiedlich elastisch nachgiebig.

Das in Figur 3 dargestellte dritte Ausführungsbeispiel sieht einen durch ein Elastomer 13" gebildeten elastischen Bereich zwischen der Stützscheibe 8" und der Schwingungsmasse 15" vor, der im Querschnitt keilförmig ausgebildet ist. Die jeweils an den keilförmigen Querschnitt des Elastomers 13" angrenzenden Bereiche der Stützscheibe 8" und der Schwingungsmasse 15" sind jeweils an die zugewandte Außenfläche des keilförmigen Querschnitts angepasst.

In Figur 4 ist der Frequenzgang des durch die Schraube 4 und den Schraubenhalter 2 gebildeten Lagerbolzens zusammen mit der Distanzhülse 10 und der über den elastischen Bereich 13 an der Stützscheibe 8 ab gestützten Schwingungsmasse 15 dargestellt, wobei das Lager 1 und das Bauteil 6 nicht berücksichtigt sind. Der Darstellung sind zwei ausgeprägte Resonanzfrequenzen entnehmbar, die durch eine entsprechende Wahl der Elastizitäten und der verwendeten Massen, insbesondere der Schwingungsmasse, bzw. den Längen und den Querschnitten insbesondere der Schraube 4 und der Distanzhülse 10 eine Abstimmung auf das Schwingungsverhalten des Bauteiles 6 ermöglicht. Dabei können im Bereich der Resonanzfrequenzen die auf das Lager 1 übertragenen dynamischen Kräfte durch Schwingungsüberlagerung insbesondere der Schwingungsmasse 15 bzw. 15' bzw. 15" vermindert werden. Während die untere Resonanzfrequenz im wesentlichen durch die Schwingungsmasse 15 bzw. 15' bzw. 15" und den elastischen Bereich 13 bzw. 13' bzw. 13" bestimmt ist, ergibt sich die obere Resonanzfrequenz im wesentlichen durch die Schwingungsmasse 15 bzw. 15' bzw. 15"und die biegeweiche Verschraubung über die Schraube 4 und die Distanzhülse 10. In der Distanzhülse 10 treten dabei keine Zugeigenspannungen auf. Die zur Befestigung des Schwingungstilgers benötigte Vorspannung ist über die Schraube 4 aufgebracht.

Der bei den Ausführungsbeispielen durch eine Schraube und einen Schraubenhalter gebildete Lagerbolzen kann auch auf andere Weise einteilig oder mehrteilig gebildet und mit einem beliebigen Teil des Lagers fest oder lösbar verbunden oder zu verbinden sein. Die Stützscheibe kann ein beliebiges Teil sein, das lösbar oder unlösbar mit dem Lagerbolzen bzw. einem Teil davon verbunden sein kann. Das den elastischen Bereich bildende Elastomer kann ein beliebiger, zumindest teilweise elastischer Kunststoff oder ein Gummi sein. Das Material des den elastischen Bereich bildenden Elastomers kann von dem Material einer Ummantelung auf der Oberfläche der Schwingungsmasse abweichen, wobei die Ummantelung auch entfallen kann. Die Schwingungsmasse kann teilweise oder vollständig mit einer Ummantelung versehen sein, die vorzugsweise geräuschdämpfend wirkt. Der elastische Bereich kann neben den bei den Ausführungsbeispielen verwendeten Querschnittsformen eine beliebige Querschnittsform aufweisen, die nicht torusförmig um die Achse des Lagerbolzens bzw. eines Teiles davon verlaufen muss. Die Schwingungsmasse kann koaxial zum Lagerbolzen oder seitlich neben dem Lagerbolzen bzw. einem Teil davon angeordnet sein. Die Stützscheibe kann eine beliebige Form aufweisen und beispielsweise durch einen Steg oder einen Hebelarm gebildet sein. Das zur Lagerung vorgesehene Bauteil kann lösbar oder unlösbar mit dem Lagerbolzen bzw. einem Teil davon verbunden oder zu verbinden sein. Die bei den Ausführungsbeispielen verwendete Distanzhülse kann auch entfallen, beispielsweise wenn eine Distanzhülse zur axialen Fixierung der Stützscheibe nicht erforderlich ist.

## Patentansprüche

1. Schwingungsdämpfende Lagerung eines Bauteiles (6), das mit einem Lagerbolzen (2, 4, 4', 4") verbunden ist, der über ein radial elastisches Lager (1) an einem Wandbereich abgestützt ist, mit einer Schwingungsmasse (15, 15', 15"), die über wenigstens einen elastischen Bereich (13, 13', 13") abgestützt ist und durch Schwingbewegungen des Bauteiles (6) angeregt mechanische Schwingungen ausführen kann, die zumindest in einem Frequenzbereich den Schwingbewegungen des Bauteiles (6) entgegen wirken, wobei der Lagerbolzen (2, 4, 4', 4") axial von dem Lager (1) absteht und an dem vorstehenden Stirnbereich des Lagerbolzens (2, 4, 4', 4") eine Stützscheibe (8, 8', 8") angeordnet ist, die über einen elastischen Bereich (13, 13', 13") mit der Schwingungsmasse (15, 15', 15") verbunden ist, **dadurch gekennzeichnet, dass** der Lagerbolzen (2, 4, 4', 4") ein- oder mehrteilig ausgebildet ist und zumindest bereichsweise um seine Längsachse (16) biegsam ausgebildet oder angeordnet ist, wodurch die Schwingungsmasse (15, 15', 15") durch Schwingbewegungen des Bauteiles (6) zu mechanischen Schwingungen angeregt werden kann, die durch die Biegeelastizität des Lagerbolzens (2, 4, 4', 4") und die Elastizität des wenigstens einen elastischen Bereiches (13, 13', 13") zumindest in zwei Frequenzbereichen den Schwingbewegungen des Bauteiles (6) entgegen wirken können.

2. Lagerung nach Anspruch 1, **dadurch gekennzeichnet, dass** die Stützscheibe (8, 8', 8") auf einem zylindrischen Umfangsbereich des Lagerbolzens (2, 4, 4', 4") angeordnet und zwischen einem radial erweiterten Kopfteil (9) des Lagerbolzens (2, 4, 4', 4") und einer vom Lagerbolzen (2, 4, 4', 4") zumindest bereichsweise durchsetzten Hülse (10) oder einem dazwischen angeordneten Distanzteil axial eingeklemmt ist.

3. Lagerung nach einem der Ansprüche 1 bis 2, **dadurch gekennzeichnet, dass** der elastische Bereich (13, 13', 13") ein zumindest an eine radial äußere stirnseitige Umfangsfläche der Stützscheibe (8, 8', 8") und an die Schwingungsmasse (15, 15', 15") anvulkanisiertes Elastomer ist.

4. Lagerung nach einem der Ansprüche 1 bis 3, **dadurch gekennzeichnet, dass** der elastische Bereich (13, 13', 13") durch eine Verdickung einer die Schwingungsmasse (15, 15', 15") zumindest teilweise umgebenden Ummantelungsschicht (14) aus einem Elastomer gebildet ist.

5. Lagerung nach Anspruch 4, **dadurch gekennzeichnet, dass** die Verdickung (13, 13', 13") zumindest einen radial äußeren Bereich der Stützscheibe (8, 8', 8") umgreift.

6. Lagerung nach einem der Ansprüche 1 bis 5, **dadurch gekennzeichnet, dass** der elastische Bereich (13') zwischen der Stützscheibe (8') und der Schwingungsmasse (15') im Querschnitt radial wellenförmig verläuft und die an den elastischen Bereich (13') angrenzenden Bereiche der Stützscheibe (8') und der Schwingungsmasse (15') an die Wellenform des elastischen Bereiches (13') angepasst sind.

7. Lagerung nach einem der Ansprüche 1 bis 6, **dadurch gekennzeichnet, dass** der elastische Bereich (13") zwischen der Stützscheibe (8") und der Schwingungsmasse (15") im Querschnitt keilförmig verläuft und die an den keilförmigen Querschnitt angrenzenden Bereiche der Stützscheibe (8") und der Schwingungsmasse (15") an die Keilform des elastischen Bereiches (13") angepasst sind.

8. Lagerung nach einem der Ansprüche 1 bis 7, **dadurch gekennzeichnet, dass** der Lagerbolzen durch eine Schraube (4, 4', 4") und einen bolzenförmigen Schraubenhalter (2) mit einem stirnseitigen Gewinde gebildet ist, in das die Schraube (4, 4', 4") axial einschraubbar ist und zumindest ein Bereich der Schraube (4, 4', 4") und/oder des Schraubenhalters und gegebenenfalls der Distanzhülse (10, 10', 10") um die Längsachse der Schraube (4, 4', 4") bzw. des Schraubenhalters zumindest etwas biegsam ist.

9. Lagerung nach einem der Ansprüche 1 bis 8, **dadurch gekennzeichnet, dass** der Lagerbolzen bzw. die Schraube (4, 4', 4") eine solche Länge aufweist, dass sich die entweder von dem Lagerbolzen bzw. der Schraube (4, 4', 4") mit einem radialen Abstand axial durchsetzte oder seitlich neben dem Lagerbolzen bzw. der Schraube angeordnete Schwingungsmasse (15, 15', 15") im wesentlichen über oder neben dem Schaft (3) des Lagerbolzens bzw. der Schraube (4, 4', 4") befindet.

10. Lagerung nach einem der Ansprüche 1 bis 9, **dadurch gekennzeichnet, dass** ein Hinterachsgetriebe eines Kraftfahrzeugs das Bauteil (6) bildet und das Hinterachsgetriebe über mehrere Lager (1) an einem Hinterachsträger (19) elastisch abgestützt ist, der seinerseits über mehrere elastische Stützlager am Boden der Karosserie des Kraftfahrzeugs elastisch befestigt ist.

## Claims

1. A vibration damping bearing arrangement of a component (6), which is connected to a bearing bolt (2, 4, 4', 4"), which is supported on a wall region via a radially elastic bearing (1), with a vibration mass (15, 15', 15"), which is supported by at least one elastic region (13, 13', 13") and, excited by vibrational movements of the component (6), can carry out mechanical vibrations, which counteract the vibrational movements of the component (6) at least in one frequency range, wherein the bearing bolt (2, 4, 4', 4") projects axially from the bearing (1) and a support disc (8, 8', 8") is arranged on the projecting end face region of the bearing bolt (2, 4, 4', 4"), which support disc is connected to the vibration mass (1 5, 15', 15") by an elastic region (13, 13', 13"), **characterised in that** the bearing bolt (2, 4, 4', 4") has a single-part or multi-part configuration and is configured or arranged so as to be flexible about its longitudinal axis (16) at least in regions, so the vibration mass (15, 15', 15") can be excited by vibrational movements of the component (6) to mechanical vibrations, which can counteract the vibrational movements of the component (6) owing to the bending elasticity of the bearing bolt (2, 4, 4', 4") and the elasticity of the at least one elastic region (13, 13', 13") at least in two frequency ranges.

2. A bearing arrangement according to claim 1, **characterised in that** the support disc (8, 8', 8") is arranged on a cylindrical peripheral region of the bearing bolt (2, 4, 4', 4") and is axially clamped between a radially widened head part (9) of the bearing bolt (2, 4, 4', 4") and a sleeve (10) penetrated at least in regions by the bearing bolt (2, 4, 4', 4") or a spacer arranged in between.

3. A bearing arrangement according to any one of claims 1 to 2, **characterised in that** the elastic region (13, 13', 13") is an elastomer vulcanised at least onto a radially outer end peripheral face of the support disc (8, 8', 8") and onto the vibration mass (15, 15', 15").

4. A bearing arrangement according to any one of claims 1 to 3, **characterised in that** the elastic region (13, 13', 13") is formed by a thickening of a sheathing layer (14) which surrounds the vibration mass (15, 15', 15") at least partially and is made of an elastomer.

5. A bearing arrangement according to claim 4, **characterised in that** the thickening (13, 13', 13") encompasses at least a radially outer region of the support disc (8, 8', 8").

6. A bearing arrangement according to any one of claims 1 to 5, **characterised in that** the elastic region (13') between the support disc (8') and the vibration mass (15') extends radially in an undulating manner in cross section and the regions of the support disc (8') and the vibration mass (15') adjoining the elastic region (13') are adapted to the undulating shape of the elastic region (13').

7. A bearing arrangement according to any one of claims 1 to 6, **characterised in that** the elastic region (13") between the support disc (8") and the vibration mass (15") extends in a wedge shape in cross section and the regions of the support disc (8") and the vibration mass (15") adjoining the wedge-shaped cross section are adapted to the wedge shape of the elastic region (13").

8. A bearing arrangement according to any one of claims 1 to 7, **characterised in that** the bearing bolt is formed by a screw (4, 4', 4") and a bolt-shaped screw holder (2) with an end thread, into which the screw (4, 4', 4") can be axially screwed, and at least one region of the screw (4, 4', 4") and/or of the screw holder and optionally of the spacer sleeve (10, 10', 10") is at least slightly flexible about the longitudinal axis of the screw (4, 4', 4") or the screw holder.

9. A bearing arrangement according to any one of claims 1 to 8, **characterised in that** the bearing bolt or the screw (4, 4', 4") has a length such that the vibration mass (15, 15', 15"), which is either axially penetrated by the bearing bolt or the screw (4, 4', 4") with a radial spacing or arranged laterally next to the bearing bolt or the screw, is located substantially over or next to the shaft (3) of the bearing bolt or the screw (4, 4' 4").

10. A bearing arrangement according to any one of claims 1 to 9, **characterised in that** a rear axle differential of a motor vehicle forms the component (6) and the rear axle differential is elastically supported by a plurality of bearings (1) on a rear axle support (19), which is in turn elastically fastened to the base of the body of the motor vehicle by a plurality of elastic support bearings.

## Revendications

1. Support antivibratoire d'un composant (6) relié à un goujon de palier (2, 4, 4', 4") appuyé à une zone de paroi par un palier élastique radial (1), comprenant une masse vibrante (15, 15', 15") supportée par au moins une zone élastique (13, 13', 13") et qui peut effectuer des vibrations mécaniques excitées par le mouvement de vibration du composant (6), ces vibrations s'opposant au moins dans une plage de fréquence au mouvement de vibration du composant (6),
le goujon de palier (2, 4, 4', 4") étant axialement en saillie par rapport au support (1), et dans la zone frontale en saillie du goujon de palier (2, 4, 4', 4"), il est prévu une rondelle d'appui (8, 8', 8") relié à la masse vibrante (15, 15', 15") par une zone élastique (13, 13', 13"),
**caractérisé en ce que**
le goujon de palier (2, 4, 4', 4") est réalisé en une ou plusieurs parties et au moins par zone, il peut fléchir autour de son axe longitudinal (16) ou est installé pour fléchir et la masse vibrante (15, 15', 15") peut être excitée pour effectuer des vibrations mécaniques par les mouvements de vibration du composant (6), ces vibrations pouvant s'opposer au mouvement de vibration du composant (6) par une élasticité en flexion du goujon de palier (2, 4, 4', 4") et l'élasticité d'au moins une zone élastique (13, 13', 13") au moins dans deux plages de fréquences.

2. Support selon la revendication 1,
**caractérisé en ce que**
la rondelle d'appui (8, 8', 8") installée sur une zone périphérique cylindrique du goujon de palier (2, 4, 4', 4") est serrée axialement entre une pièce de tête (9), s'élargissant radialement, du goujon de palier (2, 4, 4', 4") et un manchon (10) traversé au moins par zone, par le goujon de palier (2, 4, 4', 4") ou par une pièce d'écartement interposée.

3. Support selon l'une des revendications 1 ou 2,
**caractérisé en ce que**
la zone élastique (13, 13', 13") est un élastomère vulcanisé, au moins à la périphérie de la surface frontale radiale extérieure de la rondelle d'appui (8, 8', 8") et contre la masse vibrante (15, 15', 15").

4. Support selon l'une des revendications 1 à 3,
**caractérisé en ce que**
la zone élastique (13, 13', 13") est formée par un renforcement d'une couche enveloppe (14) en élastomère qui entoure au moins partiellement la masse vibrante (15, 15', 15").

5. Support selon la revendication 4,
**caractérisé en ce que**
le renforcement (13, 13', 13") entoure au moins une zone radiale extérieure de la rondelle d'appui (8, 8', 8").

6. Support selon l'une des revendications 1 à 5,
**caractérisé en ce que**
la zone élastique (13') a une section radiale de forme ondulée entre la rondelle d'appui (8') et la masse vibrante (15'), et les zones de la rondelle d'appui (8') adjacentes à la zone élastique (13') et la masse vibrante (15') sont adaptées à la forme ondulée de la zone élastique (13').

7. Support selon l'une des revendications 1 à 6,
**caractérisé en ce que**
la zone élastique (13") a une section en forme de coin entre la rondelle d'appui (8") et la masse vibrante (15"), et les zones de la rondelle d'appui (8") adjacentes à la section en forme de coin et la masse vibrante (15") sont adaptées à la forme de coin de la zone élastique (13").

8. Support selon l'une des revendications 1 à 7,
**caractérisé en ce que**
le goujon de palier est formé par une vis (4, 4', 4") et un support de vis (2) en forme de goujon avec un filetage côté frontal dans lequel est vissée axialement la vis (4, 4', 4"), et au moins une zone de la vis (4, 4', 4") et/ ou du support de vis et le cas échéant du manchon d'écartement (10, 10', 10'') peut fléchir au moins autour de l'axe longitudinal de la vis (4, 4', 4") ou du support de vis.

9. Support selon l'une des revendications 1 à 8,
**caractérisé en ce que**
le goujon de palier ou la vis (4, 4', 4") a une longueur telle que la masse vibrante (15, 15', 15") traversée axialement par le goujon de palier ou la vis (4, 4', 4"), avec une distance radiale ou latéralement à côté du goujon de palier ou de la vis, se trouve principalement au-dessus ou à côté de la tige (3) du goujon de palier ou de la vis (4, 4', 4").

10. Support selon l'une des revendications 1 à 9,
**caractérisé en ce que**
le composant (6) est la transmission de l'essieu arrière d'un véhicule automobile et cette transmission est appuyée élastiquement par plusieurs paliers (1) au support d'essieu arrière (19) lui-même fixé élastiquement au fond de la carrosserie du véhicule par plusieurs supports d'appui élastiques.
